# EUROPÄISCHE PATENTANMELDUNG

(11) **EP 2 829 841 A1**
(43) Veröffentlichungstag der Anmeldung: **28.01.2015**
(21) Anmeldenummer: 13177497.8
(22) Anmeldetag: 22.07.2013
(51) Int. Cl.: G01B 5/00, F16C 32/00, G10K 15/00

(54) **Verfahren und Vorrichtung zur berührungslosen Lagerung einer Sensor- und/oder Aktoreinrichtung**

(71) Anmelder: Voestalpine Stahl GmbH, 4020 Linz (AT)
(72) Erfinder: Gstöttenbauer, Norbert, 4209 Engerwitzdorf (AT); Stegfellner, Leopold, 4224 Wartberg ob der Aist (AT); Lengauer, Gunter, 4210 Gallneukirchen (AT)
(74) Vertreter: Jell, Friedrich

(57) **Zusammenfassung**

Die Erfindung betrifft ein Verfahren und eine Vorrichtung (1, 100, 101, 102) zur berührungslosen Lagerung einer Sensor- und/oder Aktoreinrichtung (6) gegenüber einem zumindest bereichsweise schallharten Substrat (2), insbesondere Blech, mit einer beweglichen Aufhängung (4), mit einer mit der Aufhängung (4) mechanisch verbundenen Sensor- und/oder Aktoreinrichtung (6) und mit einer mit der Aufhängung (4) mechanisch verbundenen Positioniereinrichtung (5), die mindestens ein berührungsloses Lager zur berührungslosen Lagerung der Sensor- und/oder Aktoreinrichtung (6) gegenüber dem Substrat (2) aufweist. Um eine genaue Positionierung gegenüber dem Substrat (2) zu gewährleisten, wird vorgeschlagen, dass die Positioniereinrichtung (5) zumindest eine Sonotrode (7) zur Abstrahlung eines Ultraschallfelds aufweist, das zwischen Sonotrode (7) und Substrat (2) akustische Levitationswellen zur berührungslosen Lagerung der Sensor- und/oder Aktoreinrichtung (6) gegenüber dem Substrat (2) über ein als Ultraschalllager (17) ausgeführtes berührungsloses Lager ausbildet.

## Beschreibung

Die Erfindung betrifft ein Verfahren und eine Vorrichtung zur berührungslosen Lagerung einer Sensor- und/oder Aktoreinrichtung gegenüber einem zumindest bereichsweise schallharten Substrat, insbesondere Blech, mit einer beweglichen Aufhängung, mit einer mit der Aufhängung mechanisch verbundenen Sensor- und/oder Aktoreinrichtung und mit einer mit der Aufhängung mechanisch verbundenen Positioniereinrichtung, die mindestens ein berührungsloses Lager zur berührungslosen Lagerung der Sensor- und/oder Aktoreinrichtung gegenüber dem Substrat aufweist.

Sensoreinrichtungen mit Sensoren zur berührungslosen Aufnahme von Messwerten sind unter anderem dann gefordert, wenn Material, von dem die Messdaten aufgenommen werden sollen, kontinuierlich bewegt wird bzw. die Gefahr besteht, das Material und/oder den Sensor durch gegenseitige Berührung zu beschädigen. Soll ein definierter Abstand zwischen sich bewegendem Material und Sensor eingehalten werden, ist es aus DE3435908A1 bekannt, unter Verwendung von Luftlager eine Beabstandung zwischen Sensoreinrichtung und Material auszubilden. Nachteilig dabei ist, dass zur Erzeugung des Luftlagers ein zusätzliches Betriebsmedium, nämlich Druckluft, zur Verfügung gestellt werden muss, deren Erzeugung unter anderem laufend erhöhte Betriebskosten verursacht. Zusätzlich ist der Abstand zwischen Sensor bzw. Sensoreinrichtung und Material von der Dicke des Luftpolsters abhängig, die wiederum von Druck und Menge der ausströmenden Luft beeinflusst wird. Damit wird die Einstellung des Abstands zwischen Sensor und Material vergleichsweise aufwendig und ist zusätzlich von Schwankungen in der Medienversorgung abhängig.

Der Erfindung liegt somit die Aufgabe zugrunde, ausgehend vom eingangs geschilderten Stand der Technik eine Vorrichtung dahin gehend zu verbessern, dass auf einfache und sichere Weise ein konstanter Abstand zwischen Sensor- und/oder Aktoreinrichtung und, insbesondere bewegtem, Substrat gewährleistet werden kann. Darüber hinaus soll diese Vorrichtung im Betrieb geringe laufende Kosten verursachen.

Die Erfindung löst die gestellte Aufgabe hinsichtlich der Vorrichtung dadurch, dass die Positioniereinrichtung zumindest eine Sonotrode zur Abstrahlung eines Ultraschallfelds aufweist, das zwischen Sonotrode und Substrat akustische Levitationswellen zur berührungslosen Lagerung der Sensor- und/oder Aktoreinrichtung gegenüber dem Substrat über ein als Ultraschalllager ausgeführtes berührungsloses Lager ausbildet.

Weist die Positioniereinrichtung zumindest eine Sonotrode zur Abstrahlung eines Ultraschallfelds auf, kann ein äußerst konstanter Abstand zwischen Sensor- und/oder Aktoreinrichtung und zumindest bereichsweise schallhartem Substrat ermöglicht werden, weil sich zwischen Sonotrode und Substrat akustische Levitationswellen zur berührungslosen Lagerung der Sensor- und/oder Aktoreinrichtung über ein als Ultraschalllager ausgeführtes berührungsloses Lager ausbilden können. Zudem kann damit der Abstand zwischen Sensor- und/oder Aktoreinrichtung und Substrat ohne Verwendung eines zusätzlichen Betriebsmediums aufrecht und vor allem auch besonders konstant erhalten werden. Die bewegliche Aufhängung von Sensor- und/oder Aktoreinrichtung sowie Positioniereinrichtung gestattet es nämlich, dass das von der Sonotrode abgestrahlte Ultraschallfeld den Abstand zwischen Sensor- und/oder Aktoreinrichtung und Substrat fixieren kann, insbesondere auch, wenn das Substrat bewegt wird. Die Positioniereinrichtung bildet damit im Nahfeld ein Ultraschalllager aus, welches die Sensor- und/oder Aktoreinrichtung auf exaktem Abstand zum Substrat hält. Da elektrischer Strom zur Erzeugung des Ultraschallfelds in nahezu jeder Sensoreinrichtung verfügbar ist, kann das Ultraschalllager ohne zusätzliches Betriebsmedium - abgesehen von elektrischer Energie zur Erzeugung des Ultraschallfelds - aufgebaut werden. Die erfindungsgemäße Vorrichtung ist daher äußerst flexibel einsetzbar, sodass deren Installation auch in Bereichen einer Anlage durchgeführt werden kann, in der keine speziellen Betriebsmittel wie zum Beispiel Druckluft oder eine andere Medienversorgung verfügbar sind oder zugelassen werden. Für die Erfindung ist es nämlich ausreichend, wenn zwischen Sonotrode und Substrat ein gasförmiges Medium vorhanden ist, das zur Übertragung von Ultraschall geeignet ist. Damit können einerseits Installationsaufwand und -kosten reduziert, aber auch der Aufwand hinsichtlich des laufenden Betriebs gesenkt werden.

Im Allgemeinen wird festgehalten, dass unter zumindest bereichsweise schallharte Substrate jene Substrate verstanden werden können, die gegenüber dem angrenzenden Medium einen größeren Wellenwiderstand aufweisen, welches angrenzende Medium, insbesondere Gase, Gasgemische, Schutzgase oder Luft im speziellen, sohin als schallweich zu verstehen ist. Für zumindest bereichsweise schallharte Substrate eignen sich besonders metallische Substrate, insbesondere Bleche vorzugsweise Stahlbleche. Diese metallischen Substrate können beschichtet oder unbeschichtet sein. Die Verwendung der Vorrichtung bei anderen metallischen Produkten, Halbzeugen oder deren Vormaterialien ist jedoch genauso denkbar. Auch kann sich die Erfindung für zumindest bereichsweise schallharte Substrate aus Glas, Keramik oder deren Verbundwerkstoffen eignen. Zudem ist unter einer Sensoreinrichtung jegliche Einrichtung zur Aufnahme von Messdaten vom zumindest bereichsweise schallharten Substrat denkbar. Beispielsweise induktive Sensoren, Temperatursensoren, digitale Sensoren und dergleichen. Unter Aktoreinrichtung kann jegliche Einrichtung verstanden werden, mit der auf das metallische Substrat eingewirkt werden kann - dieses beispielsweise bedruckt, gereinigt, geölt oder dergleichen wird.

Weist die Sonotrode eine Öffnung für mindestens einen Sensor und/oder Aktor der Sensor- und/oder Aktoreinrichtung auf, kann der Sensor und/oder Aktor seitlich vollständig von der Sonotrode umschlossen werden, wodurch die Ausbildung und Erhaltung einer besonders gleichmäßigen und konstanten Lagerung ermöglicht werden kann. Zudem ist es dadurch möglich, einen mechanischen Schutz der Sensor- und Aktoreinrichtung zur Verfügung zu stellen.

Ragt einen Sensor und/oder Aktor mit seitlichem Spiel wenigstens teilweise in die Öffnung der Sonotrode ein, kann dies die Messdatenerfassung verbessern. Aufgrund des Spiels zwischen Sensor und/oder Aktor und Sonotrode kann nämlich beispielsweise ein Übergreifen von Vibrationen verhindert bzw. zumindest verringert werden. Eine besonders störungsfrei arbeitende Sensor- und/oder Aktoreinrichtung kann so geschaffen werden, was auch zur Erhöhung der Standfestigkeit der Vorrichtung beitragen kann.

Über den Rand der Sonotrode hinaus kann die Sensor- und/oder Aktoreinrichtung zudem aktiv werden, wenn mindestens ein Sensor und/oder Aktor der Sensor- und/oder Aktoreinrichtung seitlich zur Sonotrode und mit Spiel zu dieser vorgesehen ist. Insbesondere kann damit auch der Kantenbereich des Substrats der Sensor- und/oder Aktoreinrichtung zugänglich werden. Vorzugsweise sind die Sensoren und/oder Aktoren zentriert gegenüber der Sonotrode angeordnet, was vorteilhaft bei der Erfassung von Randbereichen von Substraten, insbesondere bei Stahlblechen in Platinenform, sei kann. Zudem kann durch diese Zentrierung der Gleichgewichtszustand der Sonotrode erhalten bleiben, womit eine besonders robuste und standfeste Vorrichtung ermöglicht wird.

Besonders auszeichnen kann sich eine Positionierung der Sensor- und/oder Aktoreinrichtung mit Hilfe einer Sonotrode, wenn die Vorrichtung als Substrat ein bewegtes Blech, insbesondere Stahlblech, und eine Umlenkrolle zur Führung des bewegten Substrats aufweist. Bekanntermaßen sind nämlich bewegte Bleche schwingungsanfällig - mit Hilfe einer Sonotrode kann erfindungsgemäß dennoch eine exakte Positionierung der Sensor- und/oder Aktoreinrichtung sichergestellt werden.

Sind sowohl der Sensor und/oder Aktor der Sensor- und/oder Aktoreinrichtung als auch die Sonotrode über dem Substrat angeordnet, kann dies Vorteile hinsichtlich der konstruktiven Einfachheit und Standfestigkeit der Vorrichtung bedeuten. Wird nämlich die Sensor- und/oder Aktoreinrichtung von oben zum Substrat auf Abstand positioniert, spielen eventuell Messergebnisse verfälschende Verunreinigungen, die etwa an der Unterseite des Substrats durch dessen Transport verursacht wurden, nur eine geringe Rolle. Aufgrund des generierten Ultraschalllagers kann Sensor- und/oder Aktoreinrichtung auch von oben am Substrat auf Abstand gehalten werden, wenn ein entsprechender Teil der Gewichtskraft der Sensor- und/oder Aktoreinrichtung durch eine Aufhängung kompensiert wird. Sind die Sensor- und/oder Aktoreinrichtung und die Sonotrode über bzw. oberhalb der Umlenkrolle angeordnet, kann dies auch die Messdatenerfassung verbessern, da Schwingungen am bewegten Substrat im Bereich der Umlenkrolle nur in vermindertem Ausmaß auftreten. Zudem kann das Blech durch seine Abstützung an der Umlenkrolle nicht durch das Ultraschalllager weggedrückt werden, wodurch es etwa möglich ist, die Schwingungsneigung des Substrats weiter zu vermindern.

Ist sowohl mindestens der Sensor und/oder Aktor der Sensor- und/oder Aktoreinrichtung als auch die Sonotrode im durch die Umlenkrolle gekrümmten Bereich des Substrats angeordnet, kann dies eine weitere Verbesserung der Stabilität und Funktionssicherheit der Vorrichtung bewirken. Im gekrümmten Bereich liegt das Substrat nämlich vollflächig auf der Umlenkrolle auf, was die Schwingungen, die auf das UI-traschalllager zurückgehen, zusätzlich vermeiden kann.

Weist die Sonotrode eine zumindest bereichsweise gekrümmte Grundfläche auf, kann sich dies bei einer Positionierung an der Umlenkrolle besonders vorteilhaft auswirken. Durch eine gebogene Grundfläche der Sonotrode kann ein gleichmäßiger Lagerabstand zwischen Sonotrode bzw. Sensor- und/oder Aktoreinrichtung und dem über die Umlenkrolle laufenden Substrat ermöglicht werden. Vorteilhaft kann die Krümmung der Grundfläche der Krümmung des an der Umlenkrolle umgelenkten Blechs unter Berücksichtigung des Spalts zwischen Blech und Sonotrode entsprechen.

Sind die Positioniereinrichtung und die Sensor- und/oder Aktoreinrichtung über die Aufhängung drehbar gelagert, kann dies unter Umständen zusätzliche Einsatzmöglichkeiten der Sensor- und/oder Aktoreinrichtung erlauben. Mit einer so ausgestatteten Sensor- und/oder Aktoreinrichtung können auch an einem von der Horizontalen abweichend bewegten oder positionierten Substrat verlässlich in Position gehalten werden.

Die Anstellung der Sonotrode an das Substrat kann passiv erfolgen, wenn am über das Drehlager vom Hebelarm mit der Sonotrode getrennten anderen Hebelarm ein Entlastungsgewicht vorgesehen ist.

Ist die Aufhängung über mindestens einen Schwingungsknoten der Sonotrode mit der Sonotrode mechanisch verbunden, kann dies die Standfestigkeit der Sensor- und/oder Aktoreinrichtung erhöhen. Die Ultraschallschwingungen der Sonotrode können damit nämlich nicht über die Aufhängung auf die Sensor- und/oder Aktoreinrichtung übertragen werden, weil in diesen Schwingungsknoten mit einer geringen bis sogar weitgehend vernachlässigbaren Amplitude der Ultraschallschwingungen zu rechnen ist.

Weist die Aufhängung mindestens eine Linearführung auf, kann die Sensor- und/oder Aktoreinrichtung gegenüber dem Substrat verbessert positioniert werden - beispielsweise mit einer horizontalen und vertikalen Linearführung über die gesamte Breite des Substrats. Zusätzlich ermöglicht eine vertikale Linearführung die Durchführung einer ersten Abstandseinstellung zwischen Sensor- und/oder Aktoreinrichtung und Substrat, da das Ultraschalllager erst im Nahfeld der Sonotrode wirksam werden kann. Die zuverlässige Einhaltung des minimalen Abstands kann dann durch das von den Ultraschallwellen erzeugte Ultraschalllager erfolgen.

Der Sonotrode kann ein gewisse Bewegungsfreiheit in ihrer Befestigung gegeben werden, wenn die Aufhängung ein Federlager aufweist.

Weist die Sensor- und/oder Aktoreinrichtung einen induktiven Sensor, insbesondere Wirbelstromsensor, auf, können die erfassten Messdaten von einem Stahlblech zu deren Überprüfung auf Fehler und Verunreinigungen herangezogen werden. Zudem sind derartige Sensoren vergleichsweise unempfindlich gegenüber widrigen Umgebungseinflüssen, wie diese insbesondere bei einem bewegten Stahlblech auftreten können.

Es ist außerdem Aufgabe der Erfindung, ein Verfahren zur Positionierung einer Sensor- und/oder Aktoreinrichtung über einem bewegten Substrat der eingangs geschilderten Art zu vereinfachen und dabei die laufenden Betriebskosten niedrig zu halten.

Die Erfindung löst die gestellte Aufgabe hinsichtlich des Verfahrens dadurch, dass für ein Ultraschalllager mit zumindest einer Sonotrode ein Ultraschallfeld abgestrahlt wird und akustische Levitationswellen zwischen Sonotrode und bewegtem Substrat erzeugt werden, um damit die mit der Sonotrode mechanisch verbundenen Sensor- und/oder Aktoreinrichtung vom Substrat zu beabstanden.

Strahlt zumindest eine Sonotrode ein Ultraschallfeld ab und werden damit akustische Levitationswellen zwischen Sonotrode und bewegtem zumindest bereichsweise schallharten Substrat erzeugt, kann auf elegante, standfeste und genaue Weise die Position der Sensor- und/oder Aktoreinrichtung eingestellt werden, wenn mit Hilfe des damit erzeugten Ultraschalllagers die mit der Sonotrode mechanisch verbundene Sensor- und/oder Aktoreinrichtung vom Substrat beabstandet wird. Zudem ist dadurch stets eine Berührung des Substrats durch die Sensor- und/oder Aktoreinrichtung vermeidbar. Außerdem kann das durch den Nahfeldeffekt im Ultraschall erzeugte Lager ein Annähern der Sensor- und/oder Aktoreinrichtung auf sehr geringe Distanzen erlauben, ohne dass die Gefahr einer Berührung gegeben ist. Durch den Einsatz einer Sonotrode zur Erzeugung eines Ultraschalllagers kann somit ein einfaches, standfestes und sicheres Verfahren zur Positionierung einer Sensor- und/oder Aktoreinrichtung über einem bewegten Substrat geschaffen werden.

In den Figuren ist beispielsweise die Erfindung anhand mehrerer Ausführungsvarianten näher dargestellt. Es zeigen
- Fig. 1: eine Schnittansicht einer Vorrichtung nach einem ersten Ausführungsbeispiel,
- Fig. 2: eine vergrößerte Ausschnitt der Fig. 1 von Positioniereinrichtung, Sensoreinrichtung und Aufhängung,
- Fig. 3: eine Schnittansicht entsprechend III-III Fig. 2,
- Fig. 4: einen Ansicht auf eine Vorrichtung nach einem zweiten Ausführungsbeispiel,
- Fig. 5: eine Ansicht auf eine Positioniereinrichtung, Sensoreinrichtung und Aufhängung nach einem dritten Ausführungsbeispiel und
- Fig. 6: einen Teilansicht auf eine Vorrichtung nach einem vierten Ausführungsbeispiel.

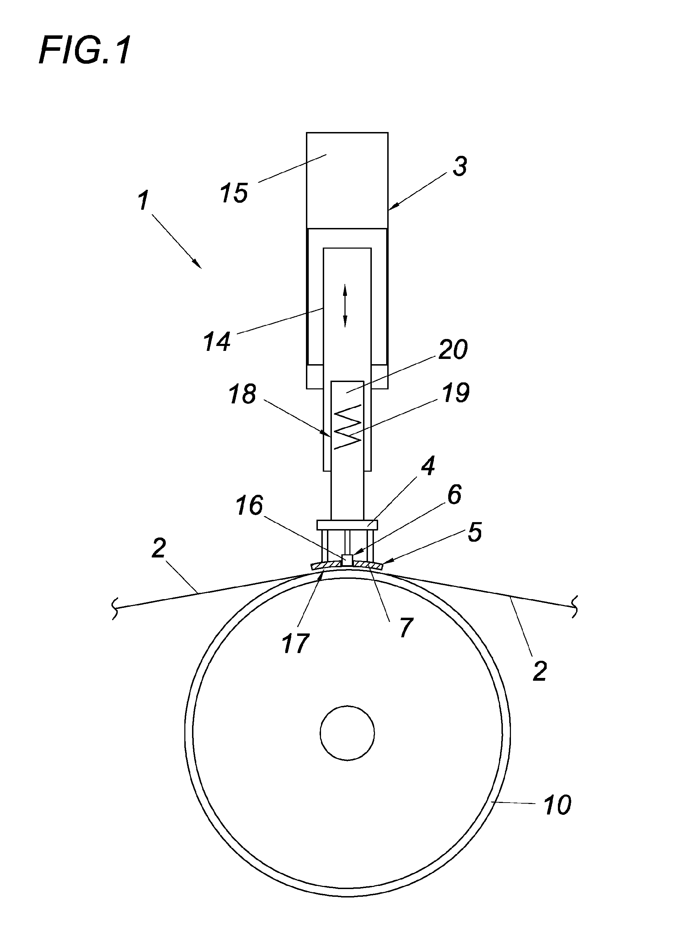

Gemäß Fig. 1 wird beispielsweise ein Schnitt durch die Seitenansicht einer Vorrichtung 1 nach einem ersten Ausführungsbeispiel gezeigt. Diese Vorrichtung 1 weist ein bewegtes und schallhartes Substrat 2, nämlich ein Stahlblech, und einer Baugruppe 3 auf. Die Baugruppe 3 umfasst eine bewegliche Aufhängung 4, mit der sowohl eine Positioniereinrichtung 5 als auch eine Sensoreinrichtung 6 mechanisch verbunden sind. Vorstellbar ist, anstatt oder zusätzlich zur Sensoreinrichtung 6 eine Aktoreinrichtung 6 vorzusehen, was der Übersichtlichkeit halber nicht dargestellt worden ist. Die Sensoreinrichtung 6 ist berührungslos gegenüber dem Substrat 2 positioniert bzw. gehalten.

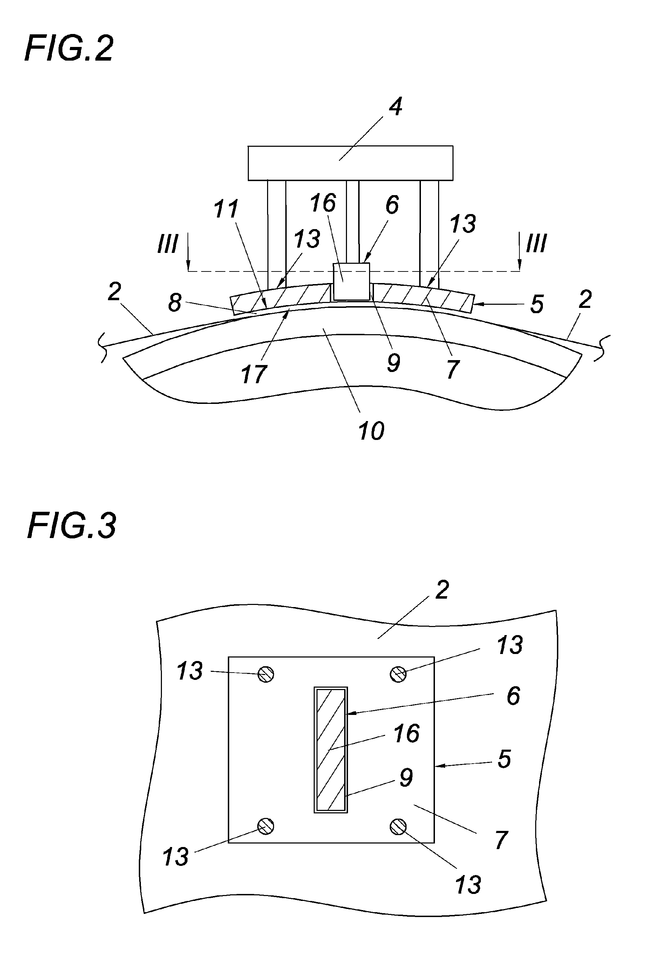

Erfindungsgemäß wird dies erreicht, indem eine Sonotrode 7 der Positioniereinrichtung 5 ein Ultraschallfeld abstrahlt. Die vom Ultraschallfeld bewirkten akustischen Levitationswellen bilden im Spalt 8, vgl. Fig. 2, zwischen Sensoreinrichtung 6 und bewegtem Substrat 2 ein Ultraschalllager 17 aus. Demgemäß wird der Abstand zwischen Sensoreinrichtung 6 und bewegtem Substrat 2 fixiert, ohne dass dazu ein zusätzliches Betriebsmedium benötigt wird. Dadurch können Vereinfachungen bei der Installation als auch eine Kostenverringerung im laufenden Betrieb erzielt werden.

Wie unter anderem den Figuren 2 und 3 im Detail entnehmbar, weist die Sonotrode 7 eine Öffnung 9 für die Sensoreinrichtung 6 bzw. seinen Sensor 16 auf. Der Sensor 16 ragt mit seitlichem Spiel in diese Öffnung 9 ein, um Messdaten vom Substrat 2 zu erfassen. Da der Sensor 16 an allen Seitenflächen von der Sonotrode 7 umfasst ist, wird auch zwischen der Sensoreinrichtung 6 und bewegtem Substrat 2 ein gleichmäßiges Ultraschalllager 17 gewährleistet.

Obwohl die Sensoreinrichtung 6 jegliche Art eines Sensors 16 aufweisen kann, sind für Messungen am Substrat 2 Wirbelstromsensoren besonders gut geeignet.

Mit der Anordnung der Sensoreinrichtung 6 und Sonotrode 7 über dem Substrat 2, im Speziellen im durch die Umlenkrolle 10 gekrümmten Bereich des Substrats 2 - wie anhand der Fig. 1 zu sehen-, kann der Vorteil genutzt werden, dass das Substrat 2 im Bereich der Sensoreinrichtung 6 vollflächig auf der Umlenkrolle 10 aufliegt. Deshalb kann das Substrat 2 durch die vom Ultraschalllager 17 verursachten Kräfte nicht aus seiner Position bzw. Lage bewegt werden. So können die Kräfte nur auf die Positioniereinrichtung 5 wirken und halten diese erfindungsgemäß in einem festen Abstand zum Substrat 2. Schwingungen des Substrats 2 sind dadurch ausgeschlossen und gewährleisten so eine standfeste Vorrichtung bzw. genaue Erfassung von Messdaten. Da die Sonotrode 7 das Ultraschalllager 17 im gekrümmten Bereich des Substrats 2 erzeugt, weist die Sonotrode 7 eine gebogene Grundfläche 11 auf, die in etwa der Krümmung des durch die Umlenkrolle 10 gekrümmten Blechs entspricht. Durch die gebogene Grundfläche 11 kann auch bei einer Positionierung über bzw. oberhalb der Umlenkrolle 10 ein gleichmäßiger Spalt 8 für das Ultraschalllager 17 gewährleistet werden.

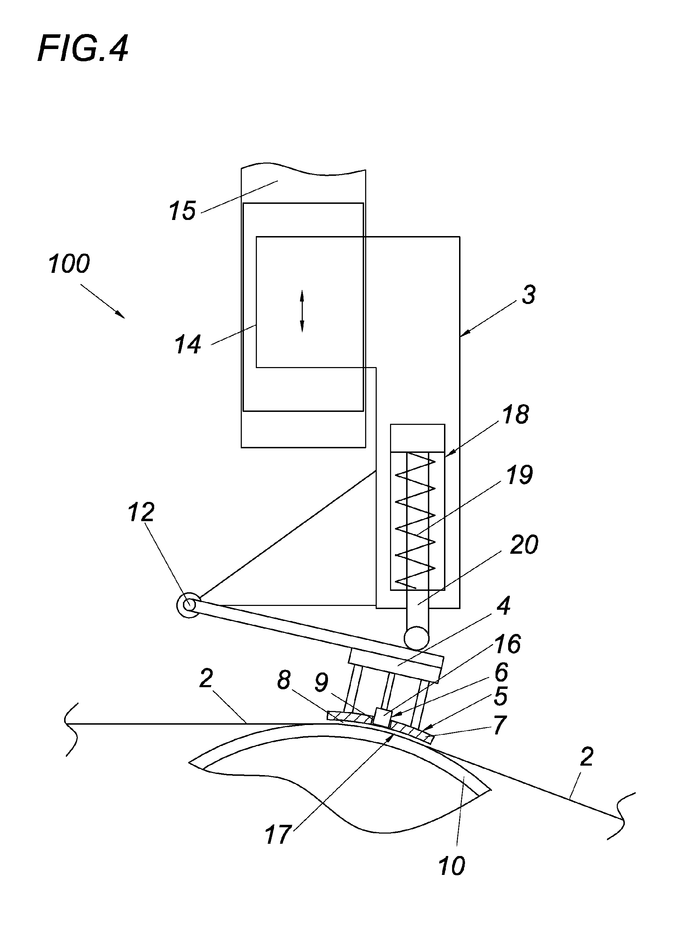

Wie im zweiten Ausführungsbeispiel nach Fig. 4 dargestellt, ist die Aufhängung 4 über den Drehpunkt 12 der Baugruppe 3 drehbar gelagert. Damit kann die Positioniereinrichtung 5 der Vorrichtung 100 auch im Bereich der Umlenkrolle 10 exakt am gekrümmten Bereich des Substrates 2 gelagert und positioniert werden. Diese Positionierung und auch die Lagerung können nicht nur über die drehbare Lagerung 12 sondern auch mit Unterstützung der horizontalen Linearführung 14 und vertikalen Linearführung 15 erfolgen.

Wie der Fig. 3 weiter zu entnehmen, ist die Sonotrode 7 mit der Aufhängung 4 an den Schwingungsknoten 13 verbunden. Mit der Wahl der Schwingungsknotenpunkte 13 als Angriffspunkte für die Aufhängung 4 wird in vorteilhafter Weise eine Übertragung der Ultraschallschwingung auf den restlichen Teil der Baugruppe 3 vermieden. Somit können erfindungsgemäß Messwerte ohne den störenden Einfluss der Sonotrodenschwingungen durch die Sensoreinrichtung 6 aufgenommen werden.

Zudem ist den Figuren 1 und 4 in der mechanischen Befestigung der Positioniereinrichtung ein Federlager 18 erkennbar, das auf Bewegungen der Sonotrode 7 kompensierend wirkt. Dieses Federlager 18 umfasst konstruktiv einfach eine Feder 19 und eine damit belasteten Führungsstange 20, wobei andere Ausführungsformen natürlich ebenso denkbar sind.

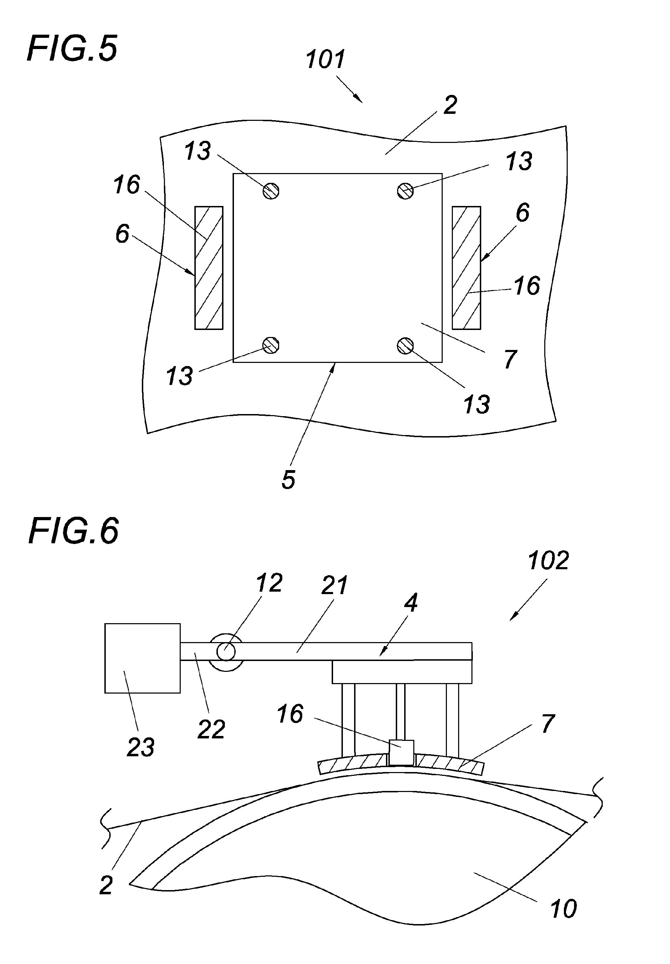

Im dritten Ausführungsbeispiel nach Fig. 5 weist die Vorrichtung 101 zwei Sensoren 16 seitlich neben der Sonotrode 7 auf, und zwar mit Spiel zur Sonotrode 7. Die beiden Sensoren 16 sind gegenüber der Seitenfläche der Sonotrode 7 zentriert, um damit den Massenschwerpunkt der Vorrichtung im Bereich der Sonotrode aufrecht zu erhalten. Zu Fig. 5 ist auch vorstellbar, Aktoren vorzusehen. Zudem kann die Sonotrode 7 auch eine Öffnung für weitere Sensoren 16 und Aktoren aufweisen, wie in Fig. 3 zu sehen - in Fig. 5 allerdings nicht näher dargestellt.

Im Allgemeinen wird erwähnt, dass natürlich auch mehrere Sonotroden 7 nebeneinander mit Sensoren und/oder Aktoren in ihren Zwischenbereichen und/oder in Öffnungen an den Sonotroden vorgesehen sein können.

Im Allgemeinen wird erwähnt, dass der Vorrichtung noch eine Regel- und/oder Steuereinrichtung zugeordnet sein kann, um über aufgenommene Sensorsignale - sei es von zusätzlichen Sensoren und/oder über die Sonotrode selbst - auf das Abstrahlverhalten der Sonotrode einzuwirken, beispielsweise den Istabstand auf einen Sollabstand einzustellen bzw. einzuregeln. Diese Sensorsignale können beispielsweise Abstandsmessdaten und/oder andere vom Abstand abhängige Messdaten enthalten, über die auf den Istabstand zwischen Sonotrode und Substrat rückgeschlossen werden kann, was nicht näher dargestellt worden ist.

Nach Fig. 6 wird eine weitere Vorrichtung 102 nach einem vierten Ausführungsbeispiel gezeigt. Diese Vorrichtung 102 kommt mit passiven Maßnahmen zur Positionierung der Sonotrode 7 aus, in dem im Vergleich zu den Ausführungen nach den Figuren 1 und 4 auf Linearführungen verzichtet wurde. So weist die Vorrichtung 102 nach Fig. 6 an der Aufhängung 4 zwei Hebelarme 21 und 22 auf, die an das gemeinsame Drehlager 12 anschließen. Der Hebelarm 21 trägt die Sonotrode 7, wobei am anderen Hebelarm 22 ein Entlastungsgewicht 23 vorgesehen ist. Damit kann die Sonotrode 7 gewichtsentlastet werden, was vorteilhaft den Steuerungsaufwand bzw. auch die Leistungsaufnahme der Sonotrode 7 zur berührungslosen Lagerung des Sensors 16 gegenüber dem Substrat 2 reduziert.

## Patentansprüche

1. Vorrichtung zur berührungslosen Lagerung einer Sensor- und/oder Aktoreinrichtung (6) gegenüber einem zumindest bereichsweise schallharten Substrat (2), insbesondere Blech, mit einer beweglichen Aufhängung (4), mit einer mit der Aufhängung (4) mechanisch verbundenen Sensor- und/oder Aktoreinrichtung (6) und mit einer mit der Aufhängung (4) mechanisch verbundenen Positioniereinrichtung (5), die mindestens ein berührungsloses Lager zur berührungslosen Lagerung der Sensor- und/oder Aktoreinrichtung (6) gegenüber dem Substrat (2) aufweist, **dadurch gekennzeichnet, dass** die Positioniereinrichtung (5) zumindest eine Sonotrode (7) zur Abstrahlung eines Ultraschallfelds aufweist, das zwischen Sonotrode (7) und Substrat (2) akustische Levitationswellen zur berührungslosen Lagerung der Sensor- und/oder Aktoreinrichtung (6) gegenüber dem Substrat (2) über ein als Ultraschalllager (17) ausgeführtes berührungsloses Lager ausbildet.

2. Vorrichtung nach Anspruch 1, **dadurch gekennzeichnet, dass** die Sonotrode (7) eine Öffnung (9) für mindestens einen Sensor (16) und/oder Aktor der Sensor- und/oder Aktoreinrichtung (6) aufweist.

3. Vorrichtung nach Anspruch 2, **dadurch gekennzeichnet, dass** Sensor (16) und/oder Aktor mit seitlichem Spiel wenigstens teilweise in die Öffnung (9) der Sonotrode (7) einragt.

4. Vorrichtung nach Anspruch 1, 2 oder 3, **dadurch gekennzeichnet, dass** mindestens ein Sensor (16) und/oder Aktor der Sensor- und/oder Aktoreinrichtung (6) seitlich zur Sonotrode und mit Spiel zu dieser vorgesehen ist.

5. Vorrichtung nach einem der Ansprüche 1 bis 4, **dadurch gekennzeichnet, dass** die Vorrichtung (1, 100, 101, 102) als Substrat (2) ein bewegtes Blech, insbesondere Stahlblech, und eine Umlenkrolle (10) zur Führung des Substrats (2) aufweist.

6. Vorrichtung nach Anspruch 5, **dadurch gekennzeichnet, dass** sowohl mindestens ein Sensor (16) und/oder Aktor der Sensor- und/oder Aktoreinrichtung (6) als auch die Sonotrode (7) über dem Substrat (2), insbesondere über der Umlenkrolle (10), angeordnet sind.

7. Vorrichtung nach Anspruch 5 oder 6, **dadurch gekennzeichnet, dass** sowohl wenigstens ein Sensor (16) und/oder Aktor der Sensor- und/oder Aktoreinrichtung (6) als auch die Sonotrode (7) im durch die Umlenkrolle (10) gekrümmten Bereich des Substrats (2) angeordnet sind.

8. Vorrichtung nach Anspruch 7, **dadurch gekennzeichnet, dass** die Sonotrode (7) eine zumindest bereichsweise gekrümmte Grundfläche (11) aufweist.

9. Vorrichtung nach einem der Ansprüche 1 bis 8, **dadurch gekennzeichnet, dass** die Positioniereinrichtung (5) und die Sensor- und/oder Aktoreinrichtung (6) über die Aufhängung (4) drehbar gelagert sind.

10. Vorrichtung nach Anspruch 9, **dadurch gekennzeichnet, dass** am über das Drehlager (12) vom Hebelarm (21) mit der Sonotrode (7) getrennten anderen Hebelarm (22) ein Entlastungsgewicht (23) vorgesehen ist.

11. Vorrichtung nach einem der Ansprüche 1 bis 10, **dadurch gekennzeichnet, dass** die Aufhängung (4) über mindestens einen Schwingungsknoten (13) der Sonotrode (7) mit der Sonotrode (7) mechanisch verbunden ist.

12. Vorrichtung nach einem der Ansprüche 1 bis 11, **dadurch gekennzeichnet, dass** die Aufhängung (4) mindestens eine Linearführung (14, 15) aufweist.

13. Vorrichtung nach einem der Ansprüche 1 bis 12, **dadurch gekennzeichnet, dass** die Aufhängung (4) ein Federlager (18) aufweist.

14. Vorrichtung nach einem der Ansprüche 1 bis 13, **dadurch gekennzeichnet, dass** die Sensor- und/oder Aktoreinrichtung (6) einen induktiven Sensor (16), insbesondere Wirbelstromsensor, aufweist.

15. Verfahren zur berührungslosen Lagerung einer Sensor- und/oder Aktoreinrichtung (6) gegenüber einem bewegten und zumindest bereichsweise schallharten Substrat (2), insbesondere Stahlblech, bei dem über ein berührungsloses Lager die Sensor- und/oder Aktoreinrichtung (6) vom Substrat (2) beabstandet wird, **dadurch gekennzeichnet, dass** für ein Ultraschalllager (17) mit zumindest einer Sonotrode (7) ein Ultraschallfeld abgestrahlt wird und akustische Levitationswellen zwischen Sonotrode (7) und bewegtem Substrat (2) erzeugt werden, um damit die mit der Sonotrode (7) mechanisch verbundene Sensor- und/oder Aktoreinrichtung (6) vom Substrat (2) zu beabstanden.
